# EUROPEAN PATENT APPLICATION

(11) **EP 4 657 768 A1**
(43) Date of publication of application: **03.12.2025**
(21) Application number: 24756313.3
(22) Date of filing: 08.02.2024
(51) Int. Cl.: H04B 7/06

(54) **BEAM LOCKING METHOD, AND DEVICE, MEDIUM AND PROGRAM PRODUCT**

(30) Priority: 17.02.2023 CN 202310152513
(71) Applicant: Huawei Technologies Co., Ltd., Shenzhen, Guangdong 518129 (CN)
(72) Inventor: GU, Chunying, Shenzhen, Guangdong 518129 (CN); LIU, Ye, Shenzhen, Guangdong 518129 (CN)
(74) Representative: Pfenning, Meinig & Partner mbB
(86) International application number: PCT/CN2024/077003
(87) International publication number: WO 2024/169941

(57) **Abstract**

This application relates to a beam locking method, a network device, a computer-readable storage medium, and a computer program product. In the method, a terminal device receives a first message from a network device. The first message herein indicates the terminal device to activate beam locking in a non-radio resource control RRC connected state. Then, the terminal device sends a second message to the network device. The second message herein is used to acknowledge activation of the beam locking. In this manner, the beam locking in the non-RRC connected state is activated, so that the terminal device can lock an antenna mode of the terminal device when the terminal device is in the non-RRC connected state, and perform sending over a same beam, avoiding fluctuation of receive power measured by the network device.

## Description

This application claims priority to Chinese Patent Application No. 202310152513.3, filed with the China National Intellectual Property Administration on February 17, 2023 and entitled "BEAM LOCKING METHOD, DEVICE, MEDIUM, AND PROGRAM PRODUCT", which is incorporated herein by reference in its entirety.

### TECHNICAL FIELD

The present disclosure generally relates to the field of telecommunications, and more specifically, to a beam locking method, a network device, a computer-readable storage medium, and a computer program product.

### BACKGROUND

Generally, conformance testing (Conformance Test) needs to be performed on a mobile terminal device to determine whether an indicator of the mobile terminal device meets a standard. A radio frequency indicator of the mobile terminal is a key to end-to-end performance of a mobile communication network. The 3rd Generation Partnership Project (3rd Generation Partnership Project, 3GPP) defines a series of radio frequency indicators for sending and receiving by a mobile terminal, among which a beam correspondence (beam correspondence) indicator specifies performance of a terminal to select a transmit beam based on a receive beam. A test method for the beam correspondence indicator is measuring whether peak equivalent isotropically radiated power and equivalent isotropically radiated power spherical coverage of a physical uplink shared channel (physical uplink shared channel, PUSCH) sent by the terminal meet a requirement.

In conventional conformance testing, to accurately and stably measure transmit power of a terminal, a test device in a radio resource control (radio resource control, RRC) connected (connected) state with the terminal device may indicate the terminal device to activate beam locking, to lock an antenna mode, so that the terminal device uses a same beam for transmission. However, in a related technology, once the terminal device releases an RRC connection to the test device, beam locking is deactivated. Therefore, the beam locking is unavailable in a non-RRC connected state: an RRC idle (idle) state or an RRC inactive (inactive) state.

### SUMMARY

This application provides a beam locking method, a network device, a computer-readable storage medium, and a computer program product, to activate beam locking in a non-RRC connected state.

According to a first aspect, a communication method is provided. The method may be performed by a network device, or a chip used in the network device, or a logical module or software that can implement all or some functions of the network device. The following uses an example in which the method is performed by the network device for description. In the method, a terminal device receives a first message from a network device, where the first message indicates the terminal device to activate beam locking in a non-radio resource control RRC connected state. Then, the terminal device sends a second message to the network device, where the second message is used to acknowledge activation of the beam locking. In this manner, the terminal device performs the beam locking in the non-RRC connected state, to use a same beam for sending, so that data measured by the network device is stable, further improving efficiency of testing the terminal device.

In some implementations, that the terminal device receives the first message from the network device includes: The terminal device in an RRC connected state receives the first message from the network device. After the terminal device sends the second message to the network device, the method further includes: The terminal device maintains the beam locking when the terminal device enters the non-RRC connected state. In this manner, the terminal device still maintains the beam locking when entering the non-RRC connected state, so that the terminal device can achieve the beam locking in the non-RRC connected state.

In some implementations, that the terminal device receives the first message from the network device includes: The terminal device in the non-RRC connected state receives the first message from the network device. In this manner, the beam locking is directly activated in the non-RRC connected state, so that the terminal device can achieve the beam locking in the non-RRC connected state.

In some implementations, the method further includes: The terminal device sends a random access request to the network device by using a first transmit beam; and in response to determining that no random access response RAR is received from the network device in a preset time window, the terminal device resends the random access request by using the first transmit beam. In this manner, even if the random access request fails, the random access request continues to be sent by using a same transmit beam, ensuring stability of transmit power of the terminal device.

In some implementations, the method further includes: The terminal device deactivates the beam locking when a quantity of times of resending the random access request reaches a preset quantity of times. In this manner, after a plurality of access attempts fail, the terminal device can automatically deactivate the beam locking, to enable the terminal device to perform testing on another function.

In some implementations, the method further includes: The terminal device receives a third message from the network device, where the third message indicates the terminal device to deactivate the beam locking; and the terminal device deactivates the beam locking in response to the third message. In this manner, the terminal device can unlock the beam locking based on the indication of the network device, so that testing of the another function is not affected.

In some implementations, the first message includes an indication for the preset quantity of times. In this manner, the quantity of times the terminal device resends the random access request can be determined based on an actual situation, improving test flexibility.

In some implementations, the method further includes: The terminal device receives at least one synchronization signal block SSB from the network device; and determines, based on a signal strength of each of the at least one SSB, a beam orienting an SSB having a highest signal strength as the transmit beam. In this manner, an optimal beam can be determined, so that the optimal beam is selected in subsequent testing to send data.

In some implementations, the first message is an RRC message. In this manner, the network device in the RRC connected state can send the first message to the terminal device.

In some implementations, the first message is an attention AT command. In this manner, the network device in the non-RRC connected state can send the first message to the terminal device.

In some implementations, sending the random access request includes: having highest transmit power on the first transmit beam. In this manner, a performance deviation caused by power measurement based on a suboptimal beam is avoided.

According to a second aspect, a communication method is provided. The method may be performed by a network device, or a chip used in the network device, or a logical module or software that can implement all or some functions of the network device. The following uses an example in which the method is performed by the network device for description. In the method, the network device sends a first message to a terminal device, where the first message indicates the terminal device to activate beam locking in a non-radio resource control RRC connected state; and the network device receives a second message from the terminal device, where the second message indicates that the beam locking of the terminal device is activated. In this manner, the network device can actively command the terminal device to activate the beam locking in the non-RRC connected state, to avoid measurement data fluctuation caused by beam switching during measurement.

In some implementations, the first message includes an indication for a preset quantity of times, and the indication for the preset quantity of times indicates the terminal device to deactivate, in response to determining that a quantity of times of resending a random access request reaches the preset quantity of times, the beam locking.

In some implementations, the first message is an RRC message.

In some implementations, the first message is an attention AT command.

In some implementations, the method further includes: In response to receiving the random access request from the terminal device, the network device skips sending a random access response to the terminal device; and the network device measures transmit power of the terminal device on a physical random access channel.

In some implementations, the method further includes: The network device in an RRC connected state sends a third message to the terminal device, where the third message indicates the terminal device to deactivate the beam locking; and the network device receives a fourth message from the terminal device, where the fourth message indicates that the beam locking is deactivated.

According to a third aspect of the present disclosure, a communication method is provided. The method may be performed by a network device, or a chip used in the network device, or a logical module or software that can implement all or some functions of the network device. The following uses an example in which the method is performed by the network device for description. In the method, a terminal device receives at least one synchronization signal block SSB from the network device, determines, based on at least one signal strength of the at least one SSB, a beam orienting an SSB having a highest signal strength as the transmit beam, and then stops monitoring of the SSB from the network device. In this manner, after determining an optimal transmit beam, the terminal device no longer re-determines the transmit beam based on the signal strength. Even if a relative position between the terminal device and the network device changes, and signal strength distribution of the SSB received by the terminal device changes, the terminal device no longer re-determines the transmit beam.

According to a fourth aspect of the present disclosure, a first communication apparatus is provided. The first communication apparatus may be a network device, or a part of the network device, or a chip disposed in the network device or the part of the network device, or a logical module or software that can implement all or some functions of the network device or the part of the network device. In addition, the part of the network device may communicate with another part of the network device. The first communication apparatus includes a processor and a memory storing instructions. When the instructions are executed by the processor, the network device is enabled to: receive a first message from a network device, where the first message indicates a terminal device to activate beam locking in a non-radio resource control RRC connected state; and send a second message to the network device, where the second message is used to acknowledge activation of the beam locking.

In some implementations, that the terminal device receives the first message from the network device includes: The terminal device in the RRC connected state receives the first message from the network device; and after the terminal device sends the second message to the network device, the method further includes: The terminal device maintains the beam locking when the terminal device enters the non-RRC connected state.

In some implementations, that the terminal device receives the first message from the network device includes: The terminal device in the non-RRC connected state receives the first message from the network device, and the terminal device activates the beam locking.

In some implementations, the instructions further enable the terminal device to send a random access request to the network device by using a first transmit beam; and in response to determining that no random access response RAR is received from the network device in a preset time window, resend the random access request by using the first transmit beam.

In some implementations, the instructions further enable the terminal device to deactivate the beam locking when a quantity of times of resending the random access request reaches a preset quantity of times.

In some implementations, the instructions further enable the terminal device to: receive a third message from the network device, where the third message indicates the terminal device to deactivate the beam locking; and deactivate the beam locking in response to the third message.

In some implementations, the instructions further enable the terminal device to: receive at least one synchronization signal block SSB from the network device; and determine, based on a signal strength of each of the at least one SSB, a beam orienting an SSB having a highest signal strength as the transmit beam.

In some implementations, the first message is an RRC message.

In some implementations, the first message is an attention AT command.

In some implementations, the terminal device has highest transmit power on the first transmit beam.

According to a fifth aspect of the present disclosure, a second communication apparatus is provided. The second communication apparatus may be a network device, or a part of the network device, or a chip disposed in the network device or the part of the network device, or a logical module or software that can implement all or some functions of the network device or the part of the network device. In addition, the part of the network device may communicate with another part of the network device. The second communication apparatus includes a processor and a memory storing instructions. When the instructions are executed by the processor, the network device is enabled to: send a first message to a terminal device, where the first message indicates the terminal device to activate beam locking in a non-radio resource control RRC connected state; and receive a second message from the terminal device, where the second message indicates that the beam locking of the terminal device is activated.

In some implementations, the first message is an RRC message.

In some implementations, the first message is an attention AT command.

In some implementations, the instructions further enable the network device to: in response to receiving the random access request from the terminal device, skip sending a random access response to the terminal device; and measure transmit power of the terminal device on a physical random access channel.

In some implementations, the instructions further enable the network device to: in an RRC connected state, send a third message to the terminal device, where the third message indicates the terminal device to deactivate the beam locking; and receive a fourth message from the terminal device, where the fourth message indicates that the beam locking is deactivated.

According to a sixth aspect of the present disclosure, a communication system is provided. The communication system may include at least one of the first communication apparatus according to the fourth aspect or the second communication apparatus according to the fifth aspect.

A seventh aspect of the present disclosure provides a computer-readable storage medium. The computer-readable storage medium stores instructions, and when the instructions are executed by an electronic device, the electronic device is enabled to perform any method according to the first aspect to the third aspect and any implementation of the first aspect to the third aspect.

According to a ninth aspect of the present disclosure, a computer program product is provided. The computer program product includes instructions, and when the instructions are executed by an electronic device, the electronic device is enabled to perform any method according to the first aspect to the third aspect and any implementation of the first aspect to the third aspect.

It should be understood that the content described in the summary is not intended to limit a key or important feature of the present disclosure, and is not intended to limit the scope of the present disclosure. The following descriptions facilitate understanding of other features of the present disclosure.

### BRIEF DESCRIPTION OF DRAWINGS

FIG. 1A to FIG. 1C are examples of communication architecture scenarios in which embodiments of the present disclosure may be implemented;
FIG. 2 is a signaling procedure for activating beam locking according to some embodiments of the present disclosure;
FIG. 3 is a signaling procedure for activating beam locking according to some other embodiments of the present disclosure;
FIG. 4A to FIG. 4D are diagrams of beam locking activation messages and beam locking activation acknowledgment messages according to an embodiment of the present disclosure;
FIG. 5A and FIG. 5B are a signaling procedure for random access testing according to an embodiment of the present disclosure;
FIG. 6 is a flowchart of a method implemented by a first network device according to an embodiment of the present disclosure;
FIG. 7 is a flowchart of a method implemented by a second network device according to an embodiment of the present disclosure;
FIG. 8 is a simplified block diagram of an example device in a possible implementation according to an embodiment of this application;
FIG. 9 is a simplified block diagram of an example device in a possible implementation according to an embodiment of this application; and
FIG. 10 is a simplified block diagram of an example device in a possible implementation according to an embodiment of this application.

Throughout all the accompanying drawings, same or similar reference numerals represent same or similar components.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to: cellular communication protocols such as a 3rd generation (3rd Generation, 3G) communication protocol, a 4th generation (4G) communication protocol, a 5th generation (5G) communication protocol, and a future communication protocol (for example, 6th generation (6G)), wireless local area network communication protocols such as the Institute of Electrical and Electronics Engineers (institute of electrical and electronics engineers, IEEE) 802.11, and/or any other protocols currently known or to be developed in future.

The technical solutions of embodiments of the present disclosure are applied to communication systems that comply with any appropriate communication protocol, for example, a long term evolution (long term evolution, LTE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a frequency division duplex (frequency division duplex, FDD) system, a time division duplex (time division duplex, TDD) system, a 5th generation (5G) system (for example, new radio (new radio, NR)), and a future communication system (for example, a sixth generation (6G) system).

For the purpose of illustration, the following describes embodiments of the present disclosure in the context of a 5G communication system in 3GPP. However, it should be understood that embodiments of the present disclosure are not limited to the communication system, but may be applied to any communication system having a similar problem, for example, a wireless local area network (WLAN), a wired communication system, or another communication system developed in the future.

The term "terminal" or "terminal device" used in the present disclosure is any terminal device that can perform wired or wireless communication with a network device or between terminal devices. The terminal device may also sometimes be referred to as user equipment (user equipment, UE). The terminal device may be any type of mobile terminal, fixed terminal, or portable terminal. The terminal device may be various wireless communication devices that have a wireless communication function. With emergence of an internet of things (internet of things, IOT) technology, more devices that previously do not have a communication function, for example, but not limited to, household appliances, transportation vehicles, tool devices, service devices, and service facilities, start to obtain a wireless communication function by being configured with a wireless communication unit, to access a wireless communication network to accept remote control. Such devices have the wireless communication function because the devices are configured with the wireless communication unit, and therefore also belong to the scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (modulator demodulator, Modem), a positioning device, a radio broadcast receiver, an e-book device, a game device, an internet of things (internet of things, IoT) device, a vehicle-mounted device, an aircraft, a virtual reality (Virtual Reality, VR) device, an augmented reality (Augmented Reality, AR) device, a wearable device (for example, a smartwatch), a terminal device in a 5G network or any terminal device in an evolved public land mobile network (Public Land Mobile Network, PLMN), another device that may be used for communication, or any combination thereof. This is not limited in embodiments of the present disclosure.

The term "network node" or "network device" used in the present disclosure is an entity or a node that may be configured to communicate with the terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a wireless access service for the terminal device. Specifically, each base station corresponds to one service coverage area. A terminal device entering the area may communicate with the base station by using a radio signal, to receive a radio access service provided by the base station. Service coverage areas of base stations may overlap, and a terminal device in an overlapping area may receive radio signals from a plurality of base stations. Therefore, the plurality of base stations may all provide services for the terminal device. Based on a size of provided service coverage, the access network device may include a macro base station for providing a macro cell (Macro cell), a micro base station for providing a micro cell (pico cell), a pico base station for providing a pico cell, and a femto base station for providing a femto cell (femto cell). In addition, the access network device may further include various forms of relay stations, access points, remote radio units (remote radio units, RRUs), radio frequency heads (radio heads, RHs), remote radio heads (remote radio heads, RRHs), and the like. In systems using different radio access technologies, the access network device may have different names. For example, the access network device is referred to as an evolved NodeB (evolved NodeB, eNB, or eNodeB) in a long term evolution system (Long Term Evolution, LTE) network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in one rack. For ease of description, in subsequent embodiments of the present disclosure, the foregoing apparatuses that provide a wireless communication function for the mobile terminal are collectively referred to as a network device. This is not specifically limited in embodiments of the present disclosure. It may be understood that all or some functions of the network device in this application may alternatively be implemented by using a software function running on hardware, or may be implemented by using an instantiated virtualization function on a platform (for example, a cloud platform).

In addition, in the descriptions of embodiments of the present disclosure, the term "network node" or "network device" may also be a system simulator (system simulator, SS) or a test device (test equipment, TE). The system simulator or the test device performs a test procedure with the terminal device or the user equipment, and can simulate various radio access network network devices described above, for example, can simulate various types of base stations to communicate with the terminal device and measure a performance indicator of the terminal device.

In the descriptions of embodiments of the present disclosure, the term "activate" may also be "enable", and the two terms may be used interchangeably. The term "deactivate" may also be "disable", and the two terms may be used interchangeably.

Initial access of the mobile terminal is one of key procedures that affect network experience and overall network performance. It is of significant value to define and test a radio frequency indicator of an initial access procedure of the mobile terminal. However, during initial access, the mobile terminal device is in a non-RRC connected state, and the beam locking described above cannot be activated. Therefore, testing cannot be performed on a beam correspondence performance indicator in a non-RRC connected state.

In view of this, an embodiment of the present disclosure provides a solution for beam locking in a non-RRC connected state. In this solution, after receiving an activation indication of a network device, a terminal device activates (or enables) beam locking in the non-RRC connected state. In this manner, the terminal device can perform testing in the non-RRC connected state through beam locking, to improve efficiency of the testing and performance evaluation of the terminal device.

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

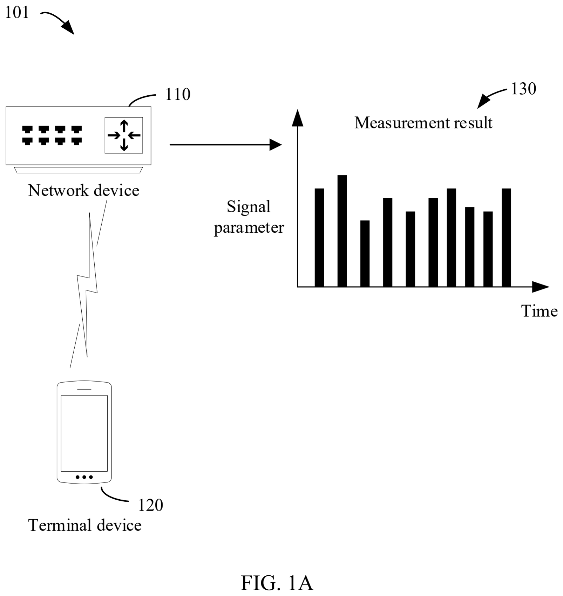

FIG. 1A is an example of a communication architecture scenario 101 in which embodiments of the present disclosure may be implemented. Communication methods provided in embodiments of this application may be applied to the communication architecture scenario 101. The communication architecture scenario 101 shows a network device 110 and a terminal device 120 that can communicate with each other. In this embodiment, the network device 110 is, for example, a system simulator, and performs testing on the terminal device 120. After the testing is completed, the network device 110 can obtain a corresponding measurement result 130 of a signal parameter that reflects a signal feature.

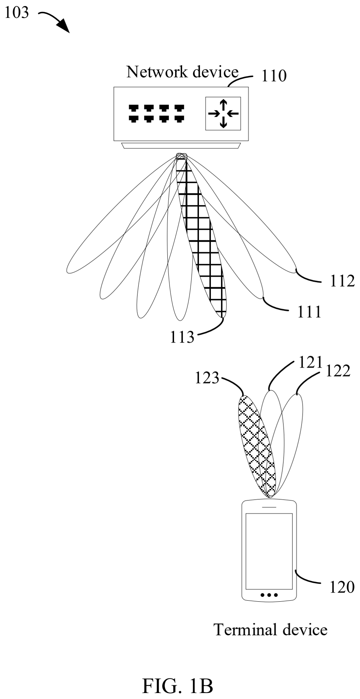

FIG. 1B is an example of a communication architecture scenario 103 in which the terminal device 120 in FIG. 1A attempts to access a network provided by the network device 110. The communication methods provided in embodiments of this application may be applied to the communication architecture scenario 103. In the communication architecture scenario 103, the network device 110 periodically sends an SSB signal. Optionally, the SSB signal is a synchronization signal and PBCH block (synchronization signal and PBCH block), or the SSB may be a synchronization signal block (synchronization signal block). The network device 110 delivers a plurality of SSB signals in each periodicity, and different SSB signals may correspond to different downlink transmit beams of the network device 110. For one SSB signal, in a plurality of periodicities, the terminal device 120 may perform signal receiving and reference signal received power (reference signal received power, RSRP) measurement by using different receive beams (receive antenna spatial domain modes). The terminal device 120 may select, as an access point, an SSB signal whose RSRP measurement result exceeds a preset threshold configured by a network, and send a PRACH signal on a physical random access channel (PRACH) resource corresponding to the SSB signal, for example, a message 1 in a random access procedure. Then, after the terminal device 120 sends the PRACH signal, if no random access response is received in a preset time window, the terminal device 120 may resend the PRACH signal with higher power on an original beam, or resend the PRACH with unchanged power on a new beam. In some implementations, the terminal device 120 may first send the PRACH signal a plurality of times through power ramping on the original beam, and then send the PRACH signal a plurality of times through power ramping on the new beam.

In an implementation shown in FIG. 1B, the network device 110 delivers seven SSB signals by using seven beams pointing in different directions. The terminal device 120 receives the SSB signals delivered by the network device 110, and performs RSRP measurement. After measuring all the seven SSB signals, the terminal device 120 may determine that RSRP measurement results of a beam 111, a beam 112, and a beam 113 exceed the preset threshold configured by the network. Therefore, the terminal device 120 may send random access requests by using a beam 121, a beam 122, and a beam 123 that respectively correspond to the beam 111, the beam 112, and the beam 113. For example, the terminal device 120 first sends a random access request to the network device 120 by using the beam 121. However, if the terminal device 120 has not received feedback information of the network device in the preset time window, the terminal device 120 resends the random access request by using the beam 121. A difference lies in that the terminal device 120 performs power ramping this time, to increase transmit power. After the request is sent for the second time, the terminal device 120 still has not received a random access response from the network device 110, and the terminal device 120 increases the transmit power again and sends the request for the third time. After the request is sent for the third time, the terminal device 120 still has not received the random access response from the network device 110, and the terminal device 120 determines to switch a beam, for example, switches to the beam 122, and then sends the random access request by using the beam 122. Then, after a fourth request fails, the terminal device 120 also performs power ramping until the terminal device 120 sends the random access request three times by using the beam 122. Finally, the terminal device 120 switches to the beam 123 and sends the random access request through power ramping by using the beam 123.

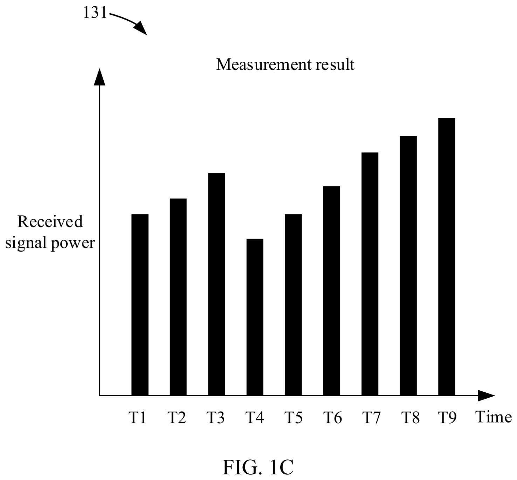

FIG. 1C is a measurement result 131 of received signal power measured in a random access procedure in FIG. 1B. Time points T1, T2, and T3 each correspond to sending the random access request by the terminal device 120 on the beam 121 through power ramping. Correspondingly, received signal power measured at the network device 110 is increased by a same increment. Time points T4, T5, and T6 each correspond to sending the random access request by the terminal device 120 on the beam 122 through power ramping. As shown in FIG. 1B, although an RSRP measurement result of the beam 122 exceeds the preset threshold, compared with the beam 121, the beam 122 has a larger deviation from the beam 123 corresponding to the beam 113 with a highest RSRP measurement result. Therefore, although transmit power used at a time point T4 is the same as transmit power used at a time point T3, received signal power measured at the time point T4 is lower than received signal power measured at the time point T3. Time points T7, T8, and T9 each correspond to sending the random access request by the terminal device 120 on the beam 123 through power ramping. Because the beam 123 corresponds to the beam 113 with the highest RSRP measurement result, received signal power measured at a time point T7 is obviously higher than received signal power measured at another time point. Overall, the received signal power measured at the network device 110 fluctuates significantly due to beam switching and power ramping.

It should be understood that the foregoing wireless communication system is applicable to both a low frequency scenario (sub 6G) and a high frequency scenario (above 6G). An application scenario of the wireless communication system includes but is not limited to an existing communication system like a 5th generation (5G) system or a new radio (new radio, NR) communication system, a future evolved public land mobile network (public land mobile network, PLMN) system, or the like.

The terminal device 120 may be a cellular phone, a cordless phone, a session initiation protocol (session initiation protocol, SIP) phone, a wireless local loop (wireless local loop, WLL) station, a handheld device having a wireless communication function, a computing device, or another processing device connected to a wireless modem, a vehicle-mounted device, a wearable device, a terminal apparatus in a future 5G network, a terminal apparatus in a further evolved PLMN, or the like.

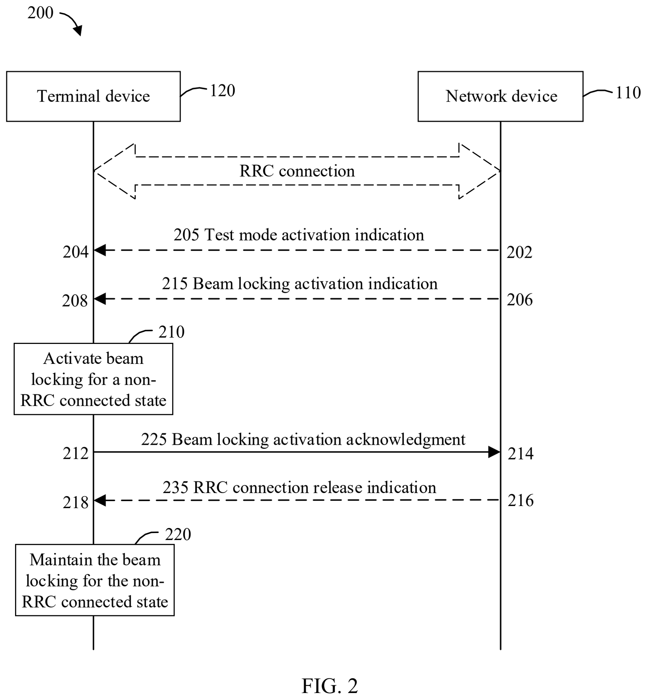

The following describes the solutions in embodiments of the present disclosure in detail with reference to FIG. 2 to FIG. 5B.

FIG. 2 is a signaling procedure 200 for activating beam locking according to some embodiments of the present disclosure. For the purpose of clear discussion without any limitation, the signaling procedure 200 is discussed with reference to FIG. 1A to FIG. 1C. The signaling procedure 200 may be performed, for example, by the network device 110 and the terminal device 120 in FIG. 1A.

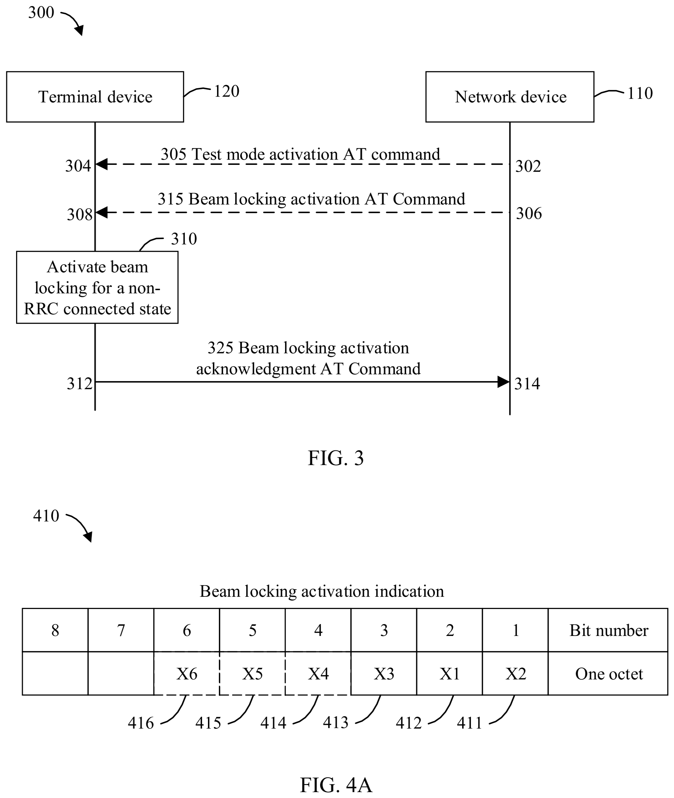

In the signaling procedure 200, the network device 110 and the terminal device 120 are in an RRC connected state. The network device 110 sends (202) an RRC message including a test mode activation indication 205 to the terminal device 120. After receiving (204) the test mode activation indication 205, the terminal device 120 activates a test mode. Then, the network device 110 sends (206) an RRC message including a beam locking activation indication 215 to the terminal device 120. The beam locking activation indication 215 herein indicates the terminal device 120 to activate beam locking for a non-RRC connected state (namely, an RRC idle state and an RRC inactive state), that is, indicates the terminal device in the non-RRC connected state to lock a selected beam. The RRC message including the beam locking activation indication 215 is also referred to as a first message, and indicates the terminal device 120 to activate the beam locking in the non-radio resource control RRC connected state. After receiving (208) the beam locking activation indication 215, the terminal device 120 activates (210) the beam locking. The terminal device 120 sends (212) an RRC message including a beam locking activation acknowledgment 225 to the network device 110. The RRC message including the beam locking activation acknowledgment 225 is also referred to as a second message, and is used to acknowledge activation of the beam locking. The following describes a beam locking activation indication message in detail with reference to FIG. 4A to FIG. 4D.

FIG. 4A is a diagram of a beam locking activation indication message 410 according to an embodiment of the present disclosure. The beam locking activation indication message 410 corresponds, for example, to the beam locking activation indication 215 in FIG. 2. As shown in FIG. 4A, the beam locking activation indication message 410 includes one octet. A bit 411 numbered 1 in the octet has a value X2. In some implementations, the value X2 indicates whether to lock a mode of a transmit antenna. For example, when X2 is 1, the terminal device 120 locks the mode of the transmit antenna, and when X2 is 0, the terminal device 120 does not lock the mode of the transmit antenna. A bit 412 numbered 2 in the octet has a value X1. In some implementations, the value X1 indicates whether to lock a mode of a receive antenna. For example, when X1 is 1, the terminal device 120 locks the mode of the receive antenna, and when X1 is 0, the terminal device 120 does not lock the mode of the receive antenna. A bit 413 numbered 2 in the octet has a value X3. In some implementations, the value X3 indicates whether to activate beam locking for the RRC connected state or to activate beam locking for the non-RRC connected state. For example, when X3 is 0, the terminal device 120 activates the beam locking for the RRC connected state, and when X3 is 1, the terminal device 120 activates the beam locking for the non-RRC connected state.

In addition, bits 414, 415, and 416 that are numbered 4, 5, and 6 in the octet may indicate a preset quantity of times the terminal device 120 uses a same beam for sending and resending. When a quantity of times the terminal device 120 performs sending and resending reaches the preset quantity of times, the terminal device 120 automatically deactivates (or disables) the beam locking. In some implementations, values X4, X5, X6 of the bits 414, 415, 416 respectively correspond to values of a least significant bit, a middle bit, and a most significant bit of a base of the preset quantity of times in binary. For example, when X4, X5, and X6 are all 1, the base of the preset quantity of times is a binary number "111", corresponding to a decimal number "7". Then, the base is multiplied by 8 to function as the preset quantity of times.

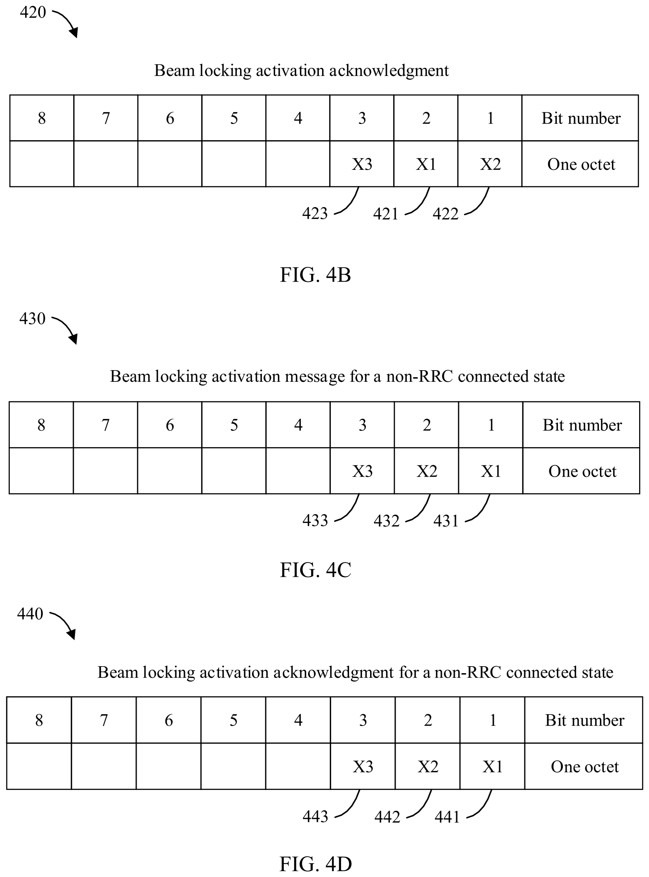

FIG. 4B is a diagram of a beam locking activation acknowledgment message 420 according to an embodiment of the present disclosure. The beam locking activation acknowledgment message 420 corresponds, for example, to the beam locking activation acknowledgment 225 in FIG. 2. As shown in FIG. 4B, the beam locking activation indication message 420 includes one octet. A bit 421 numbered 1 in the octet has a value X2 corresponding to X2 in FIG. 4A. Similarly, a bit 422 numbered 2 in the octet has a value X1 corresponding to X1 in FIG. 4A. A bit 423 numbered 1 in the octet has a value X3 corresponding to X3 in FIG. 4A. Therefore, the network device 110 can determine an activation status at the terminal device 120 based on the beam locking activation acknowledgment message 420.

In implementations shown in FIG. 4A and FIG. 4B, the indication for the beam locking for the non-RRC connected state and the indication for the beam locking for the RRC connected state are integrated into one message. In some optional implementations, independent messages may respectively indicate the beam locking for the non-RRC connected state and the beam locking for the RRC connected state. With reference to FIG. 4C and FIG. 4D, the following describes in detail a message for beam locking for a non-RRC connected state.

FIG. 4C is a diagram of a beam locking activation indication message 430 for a non-RRC connected state according to an embodiment of the present disclosure. The beam locking activation indication message 430 corresponds, for example, to the beam locking activation indication 215 in FIG. 2. As shown in FIG. 4C, the beam locking activation indication message 430 includes one octet. Bits 431, 432, and 433 that are numbered 1, 2, and 3 in the octet may indicate the preset quantity of times the terminal device 120 uses the same beam for sending and resending. In some implementations, values X1, X2, X3 of the bits 431, 432, 433 respectively correspond to values of a least significant bit, a middle bit, and a most significant bit of a base of the preset quantity of times in binary. For example, when X1, X2, and X3 are all 1, the base of the preset quantity of times is a binary number "111", corresponding to a decimal number "7". Then, the base is multiplied by 8 to function as the preset quantity of times. In the non-RRC connected state, testing is not performed on a related indicator for the receive antenna. Therefore, the beam locking activation indication message 430 indicates to lock the transmit antenna, and another bit is not needed to indicate whether to lock the transmit antenna or the receive antenna.

It should be understood that, three bits that are in the beam locking activation indication message 410 and the beam locking activation indication message 430 and that indicate the base of the preset quantity of times are merely an example, and more or fewer bits may be further included, for example, two, four or five bits are included. In addition, a multiplier for the base of the preset quantity of times may be a fixed value, or may be indicated by using another bit. In some implementations, the octet may include a bit indicating the multiplier. For example, when the bit is 0, the multiplier may be 4; or when the bit is 1, the multiplier may alternatively be 8.

FIG. 4D is a diagram of a beam locking activation acknowledgment message 430 for a non-RRC connected state according to an embodiment of the present disclosure. The beam locking activation acknowledgment message 430 corresponds, for example, to the beam locking activation acknowledgment 225 in FIG. 2. As shown in FIG. 4D, the beam locking activation indication message 440 includes one octet. A bit 441 numbered 1 in the octet has a value X1 corresponding to X1 in FIG. 4C. Similarly, a bit 442 numbered 2 in the octet has a value X2 corresponding to X2 in FIG. 4C. A bit 443 numbered 1 in the octet has a value X3 corresponding to X3 in FIG. 4C. Therefore, the network device 110 can determine an activation status at the terminal device 120 based on the beam locking activation acknowledgment message 440.

Refer to FIG. 2. The network device 110 receives (214) the beam locking activation acknowledgment 225 to learn that the terminal device 120 already activates the beam locking. Then, the network device 110 sends (216) an RRC connection release indication 235 to the terminal device 120. After receiving (218) the RRC connection release indication 235, the terminal device 120 enters the non-RRC connected state. In this case, the terminal device 120 maintains (220) the beam locking. Therefore, the terminal device 120 still achieves the beam locking in the non-RRC connected state.

FIG. 3 is a signaling procedure 300 for activating beam locking according to some other embodiments of the present disclosure. For the purpose of clear discussion without any limitation, the signaling procedure 300 is discussed with reference to FIG. 1A to FIG. 1C. The signaling procedure 300 may be performed, for example, by the network device 110 and the terminal device 120 in FIG. 1A.

In the signaling procedure 300, the network device 110 and the terminal device 120 are in the non-RRC connected state. In this case, the network device 110 can communicate with the terminal device 120 by using an AT (Attention) command, for example, by using a Uu (User equipment to network device universal) interface. The network device 110 sends (302) an AT command including a test mode activation indication 305 to the terminal device 120. After receiving (304) the test mode activation indication 305, the terminal device 120 activates a test mode. Then, the network device 110 sends (306) an AT command including a beam locking activation indication 315 to the terminal device 120. The beam locking activation indication 315 herein indicates the terminal device 120 to activate beam locking for a non-RRC connected state (namely, an RRC idle state and an RRC inactive state). After receiving (308) the beam locking activation indication 315, the terminal device 120 activates (310) the beam locking for the non-RRC connected state, and sends (312) the RRC message including the beam locking activation acknowledgment 225 to the network device 110. The network device 110 receives (214) the beam locking activation acknowledgment 225 to learn that the terminal device 120 already activates the beam locking. In this case, the terminal device 120 maintains (220) the beam locking. Therefore, the terminal device 120 activates the beam locking in the non-RRC connected state.

The signaling procedure 300 may be performed when the terminal device 120 is in the non-RRC connected state, so that the beam locking for the non-RRC connected state can still be activated when an RRC message cannot be received. It should be understood that the signaling procedure 300 may be further performed when the terminal device 120 is in the RRC connected state. Therefore, activation for the beam locking is more flexible.

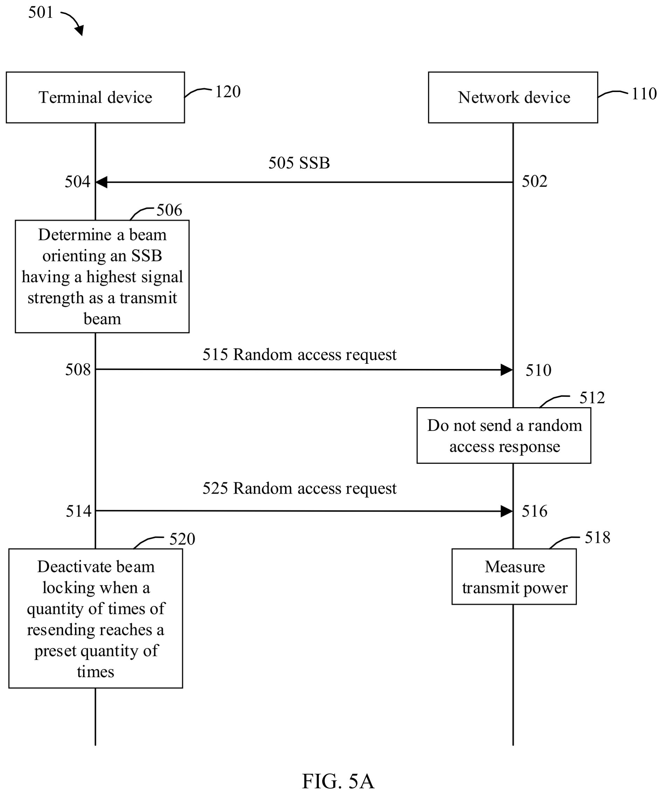

FIG. 5A is a signaling procedure 501 for random access testing according to some embodiments of the present disclosure. For the purpose of clear discussion without any limitation, the signaling procedure 501 is discussed with reference to FIG. 1A to FIG. 1C. The signaling procedure 501 may be performed, for example, by the network device 110 and the terminal device 120 in FIG. 1A. In this case, the terminal device 110 herein is in the non-RRC connected state, and the beam locking for the non-RRC connected state is activated.

As shown in FIG. 5A, in the signaling procedure 501, the network device 110 periodically sends (502) an SSB signal 505 to the terminal device 120. When receiving (504) the SSB signal 505, the terminal device 120 performs RSRP measurement on the SSB signal, and determines (506), based on an RSRP measurement result, a beam orienting an SSB signal having a highest signal strength, for example, the beam 113 in FIG. 1B, as the transmit beam. In this case, the terminal device 120 initiates a random access procedure, and sends (508) a random access request 515 to the network device 110 on the determined transmit beam. In some implementations, the terminal device 120 sends the random access request 515 with maximum power of the terminal device 120. After receiving (510) the random access request 515 from the terminal device 120, for example, for a test purpose, the network device 110 does not send (512) a random access response, to enable the terminal device 120 to resend the random access request. When the terminal device 120 determines that no random access response is received in the preset time window, the terminal device 120 resends a random access request 525 with the maximum power on a same beam. Each time the network device 110 receives (516) a random access request from the terminal device, the network device 110 measures (518) transmit power of the terminal device, to obtain a test result. If a total quantity of times the terminal device 120 sends and resends the random access request reaches a preset quantity of times (for example, the preset quantity of times indicated by X4, X5, and X6 in the beam locking activation indication message 410 in FIG. 4A or the preset quantity of times indicated by X1, X2, and X3 in the beam locking activation message for the non-RRC connected state in FIG. 4C), the terminal device 120 autonomously deactivates the beam locking.

In some embodiments, if the terminal device is in the RRC inactive state, is configured with random access channel-based small data transmission (RACH based small data transmission, RA-SDT), and initiates the random access procedure, the terminal device 120 first determines a spatial filter that generates highest equivalent isotropically radiated power (equivalent isotropically radiated power, EIRP) in a direction orienting an incoming SSB signal, and locks the spatial filter for sending by the terminal device. Then, the terminal device sends a PRACH preamble with the maximum power of the terminal device by using the determined spatial filter.

In another implementation, in some embodiments, if the terminal device is in the RRC inactive state, is configured with configured grant small data transmission (configured grant small data transmission, CG-SDT), and initiates small data transmission, the terminal device 120 first determines a spatial filter that generates highest equivalent isotropically radiated power in a direction orienting an incoming SSB signal, and locks the spatial filter for sending by the terminal device. Then, the terminal device sends data with the maximum power of the terminal device on a PUSCH by using the determined spatial filter.

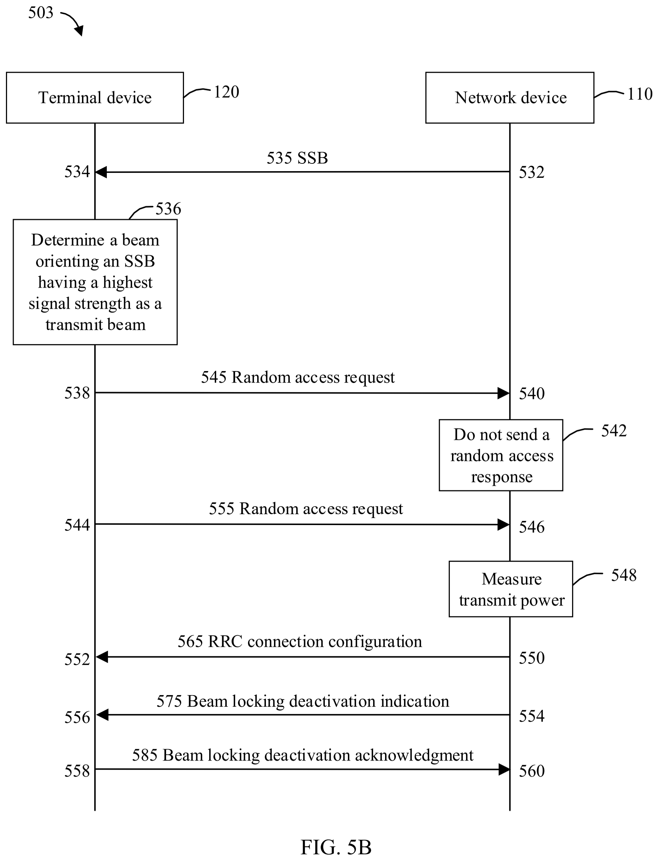

FIG. 5B is a signaling procedure 503 for random access testing according to some other embodiments of the present disclosure. For the purpose of clear discussion without any limitation, the signaling procedure 503 is discussed with reference to FIG. 1A to FIG. 1C. The signaling procedure 501 may be performed, for example, by the network device 110 and the terminal device 120 in FIG. 1A.

The signaling procedure 503 is similar to the signaling procedure 501. The network device 110 periodically sends (532) an SSB signal 535 to the terminal device 120. When receiving (534) the SSB signal 535, the terminal device 120 performs RSRP measurement on the SSB signal, and determines (536), based on an RSRP measurement result, a beam orienting an SSB signal having a highest signal strength, as the transmit beam. In this case, the terminal device 120 initiates a random access procedure, and sends (538) a random access request 545 to the network device 110 on the determined transmit beam. After receiving (540) the random access request 545 from the terminal device 120, the network device 110 does not send (542) a random access response, to enable the terminal device 120 to resend the random access request. When the terminal device 120 determines that no random access response is received in the preset time window, the terminal device 120 resends a random access request 555 with the maximum power on a same beam. When the network device 110 receives (546) a random access request from the terminal device 120, the network device 110 measures (548) transmit power of the terminal device, to obtain a test result. A difference between the signaling procedure 503 and the signaling procedure 501 lies in that before a total quantity of times the terminal device 120 sends and resends the random access request reaches the preset quantity of times, the network device 110 sends (550) RRC connection configuration 565 to the terminal device 120 in response to the random access request. When receiving (552) the RRC connection configuration 565, the terminal device 120 establishes an RRC connection to the network device 110. In this case, the terminal device 120 is in the RRC connected state, and may unlock the beam locking for the non-RRC connected state. In this case, the network device 110 sends (554) an RRC message including a beam locking deactivation indication 575 to the terminal device 120. An RRC message including the beam locking deactivation indication 575 is also referred to as a third message, and indicates the terminal device to deactivate the beam locking. After receiving (556) the beam locking deactivation indication 575, the terminal device 120 unlocks the beam locking for the non-RRC connected state, and sends (558) an RRC message including a beam locking deactivation acknowledgment 585 to the network device. The network device 120 receives (560) the beam locking deactivation acknowledgment 585, to acknowledge that the terminal device 120 deactivates the beam locking for the non-RRC connected state.

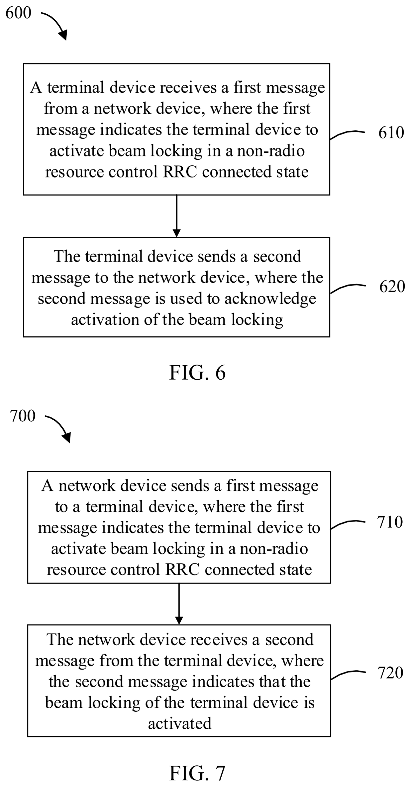

FIG. 6 is a flowchart of a method 600 implemented by a terminal device according to an embodiment of the present disclosure. In a possible implementation, the method 600 may be implemented by the terminal device 120 in the example communication architecture scenarios 101 and 103. In another possible implementation, the method 600 may alternatively be implemented by another electronic apparatus independent of the example communication architecture scenarios 101 and 103. For example, the following describes the method 600 by using an example in which the terminal device 120 in the example communication architecture scenarios 101 and 103 implements the method.

As shown in FIG. 6, in 610, a terminal device receives a first message from a network device, where the first message indicates the terminal device to activate beam locking in a non-radio resource control RRC connected state. In 620, the terminal device sends a second message to the network device, where the second message is used to acknowledge activation of the beam locking. In this manner, the terminal device performs the beam locking in the non-RRC connected state, to use a same beam for sending, so that data measured by the network device is stable, further improving efficiency of testing the terminal device.

In some implementations, that the terminal device receives the first message from the network device includes: The terminal device in an RRC connected state receives the first message from the network device. After the terminal device sends the second message to the network device, the method further includes: The terminal device maintains the beam locking when the terminal device enters the non-RRC connected state.

In some implementations, that the terminal device receives the first message from the network device includes: The terminal device in the non-RRC connected state receives the first message from the network device.

In some implementations, the method further includes: The terminal device sends a random access request to the network device by using a first transmit beam; and in response to determining that no random access response RAR is received from the network device in a preset time window, the terminal device resends the random access request by using the first transmit beam.

In some implementations, the method further includes: The terminal device deactivates the beam locking when a quantity of times of resending the random access request reaches a preset quantity of times.

In some implementations, the method further includes: The terminal device receives a third message from the network device, where the third message indicates the terminal device to deactivate the beam locking; and the terminal device deactivates the beam locking in response to the third message.

In some implementations, the first message includes an indication for a preset quantity of times.

In some implementations, the method further includes: The terminal device receives at least one synchronization signal block SSB from the network device; and determines, based on a signal strength of each of the at least one SSB, a beam orienting an SSB having a highest signal strength as the transmit beam.

In some implementations, the first message is an RRC message.

In some implementations, the first message is an attention AT command.

In some implementations, sending the random access request includes: having highest transmit power on the first transmit beam.

FIG. 7 is a flowchart of a method 700 implemented by a network device according to an embodiment of the present disclosure. In a possible implementation, the method 700 may be implemented by the network device 110 in the example communication architecture scenarios 101 and 103. In another possible implementation, the method 700 may alternatively be implemented by another electronic apparatus independent of the example communication architecture scenarios 101 and 103. For example, the following describes the method 700 by using an example in which the network device 110 in the example communication architecture scenarios 101 and 103 implements the method.

As shown in FIG. 7, in 710, a network device sends a first message to a terminal device, where the first message indicates the terminal device to activate beam locking in a non-radio resource control RRC connected state. In 720, the network device receives a second message from the terminal device, where the second message indicates that the beam locking of the terminal device is activated.

In some implementations, the first message includes an indication for a preset quantity of times, and the indication for the preset quantity of times indicates the terminal device to deactivate, in response to determining that a quantity of times of resending a random access request reaches the preset quantity of times, the beam locking.

In some implementations, the first message is an RRC message.

In some implementations, the first message is an attention AT command.

In some implementations, the method further includes: In response to receiving the random access request from the terminal device, the network device skips sending a random access response to the terminal device; and the network device measures transmit power of the terminal device on a physical random access channel.

In some implementations, the method further includes: The network device in an RRC connected state sends a third message to the terminal device, where the third message indicates the terminal device to deactivate the beam locking; and the network device receives a fourth message from the terminal device, where the fourth message indicates that the beam locking is deactivated.

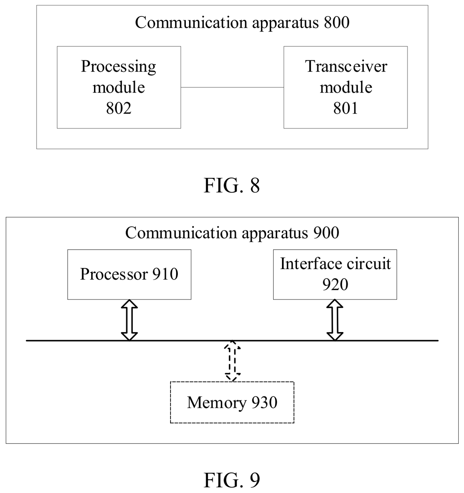

FIG. 8 and FIG. 9 are diagrams of possible structures of communication apparatuses according to embodiments of this application. The communication apparatuses may implement a function of the terminal device or the network device in the foregoing method embodiments. Therefore, beneficial effects of the foregoing method embodiments can also be implemented. In embodiments of this application, the communication apparatus may be the terminal device 120 shown in FIG. 1A and FIG. 1B or the network device 110 shown in FIG. 1A and FIG. 1B, or a module (for example, a chip) used in these devices.

As shown in FIG. 8, the communication apparatus 800 includes a transceiver module 801 and a processing module 802. The communication apparatus 800 may be configured to implement functions of the terminal device or the network device in the method embodiment shown in FIG. 2.

When the communication apparatus 800 is configured to implement functions of the terminal device 120 in the method embodiment in FIG. 2, a transceiver module 801 is configured to: receive a first message from a network device, where the first message indicates the terminal device to activate beam locking in a non-radio resource control RRC connected state; and is configured by the terminal device to send a second message to the network device, where the second message is used to acknowledge activation of the beam locking; and a processing module 802 is configured to activate beam locking in a non-radio resource control RRC connected state.

When the communication apparatus 800 is configured to implement functions of the network device 110 in the method embodiment in FIG. 2, the transceiver module 801 is configured to: send the first message to the terminal device, where the first message indicates the terminal device to activate the beam locking in the non-radio resource control RRC connected state; and receive the second message from the terminal device, where the second message indicates that the beam locking of the terminal device is activated.

For more detailed descriptions of the transceiver module 801 and the processing module 802, refer to related descriptions in the foregoing method embodiment. Details are not described herein again.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the methods in the foregoing method embodiments, the processor 910 is configured to perform a function of the foregoing processing module 602, and the interface circuit 920 is configured to perform a function of the foregoing transceiver module 801.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor, or any regular processor.

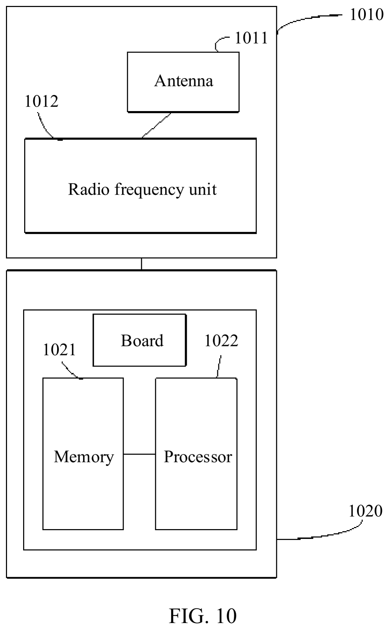

When the apparatus in this embodiment of this application is a network device, the apparatus may be shown in FIG. 10. The apparatus may include one or more radio frequency units, for example, a remote radio unit (remote radio unit, RRU) 1010 and one or more baseband units (baseband units, BBU) (which may also be referred to as a digital unit (digital unit, DU)) 1020. The RRU 1010 may be referred to as a transceiver module. The transceiver module may include a sending module and a receiving module, or the transceiver module may be a module that can implement sending and receiving functions. The transceiver module may correspond to the transceiver module 801 shown in FIG. 8, that is, may perform an action performed by the transceiver module 801. Optionally, the transceiver module may also be referred to as a transceiver machine, a transceiver circuit, a transceiver, or the like, and may include at least one antenna 1011 and a radio frequency unit 1012. The RRU 1010 is mainly configured to: receive and send a radio frequency signal, and perform conversion between a radio frequency signal and a baseband signal. The BBU 1010 is mainly configured to: perform baseband processing, control a base station, and the like. The RRU 1010 and the BBU 1020 may be physically disposed together, or may be physically disposed separately, namely, in a distributed base station.

The BBU 1020 is a control center of the base station, may also be referred to as a processing module, may correspond to the processing module 802 shown in FIG. 8, and is mainly configured to complete a baseband processing function, for example, channel coding, multiplexing, modulation, and spectrum spreading. In addition, the processing module may perform an action performed by the processing module 802. For example, the BBU (the processing module) may be configured to control the base station to perform an operation procedure related to the network device in the foregoing method embodiments.

In an example, the BBU 1020 may include one or more boards, and a plurality of boards may jointly support a radio access network (for example, an LTE network) of a single access standard, or may separately support radio access networks (for example, an LTE network, a 5G network, or another network) of different access standards. The BBU 1020 further includes a memory 1021 and a processor 1022. The memory 1021 is configured to store necessary instructions and data. The processor 1022 is configured to control the base station to perform a necessary action, for example, configured to control the base station to perform the operation procedure related to the network device in the foregoing method embodiments. The memory 1021 and the processor 1022 may serve one or more boards. In other words, a memory and a processor may be disposed on each board. Alternatively, a plurality of boards may share a same memory and a same processor. In addition, a necessary circuit may be further disposed on each board.

An embodiment of this application provides a communication system. The communication system may include the terminal device in the embodiment shown in FIG. 2, and include the network device in the embodiment shown in FIG. 2. Optionally, the terminal device and the network device in the communication system may perform the communication method shown in FIG. 2.

An embodiment of this application further provides a circuit. The circuit may be coupled to a memory, and may be configured to perform a procedure related to the terminal device or the network device in any one of the foregoing method embodiments. The chip system may include the chip, and may further include another component like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include, but is not limited to, these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the communication methods and apparatuses may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the contributing part, or some of the technical solutions can be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between indicated objects, but do not imply a specific spatial order, a time order, an importance order, or the like of the indicated objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving, by a terminal device, a first message from a network device, wherein the first message indicates the terminal device to activate beam locking in a non-radio resource control RRC connected state; and
sending, by the terminal device, a second message to the network device, wherein the second message is used to acknowledge activation of the beam locking.

2. The method according to claim 1, wherein receiving, by the terminal device, the first message from the network device comprises:
receiving, by the terminal device in an RRC connected state, the first message from the network device; and
after sending, by the terminal device, the second message to the network device, the method further comprises:
maintaining, by the terminal device, the beam locking when the terminal device enters the non-RRC connected state.

3. The method according to claim 1, wherein receiving, by the terminal device, the first message from the network device comprises:
receiving, by the terminal device in the non-RRC connected state, the first message from the network device.

4. The method according to any one of claims 1 to 3, further comprising:
sending, by the terminal device, a random access request to the network device by using a first transmit beam; and
in response to determining that no random access response RAR is received from the network device in a preset time window, resending, by the terminal device, the random access request by using the first transmit beam.

5. The method according to claim 4, further comprising:
deactivating, by the terminal device, the beam locking when a quantity of times of resending the random access request reaches a preset quantity of times.

6. The method according to claim 4, further comprising:
receiving, by the terminal device, a third message from the network device, wherein the third message indicates the terminal device to deactivate the beam locking; and
deactivating, by the terminal device, the beam locking in response to the third message.

7. The method according to claim 4, further comprising:
receiving, by the terminal device, at least one synchronization signal block SSB from the network device; and
determining, based on a signal strength of each of the at least one SSB, a beam orienting an SSB having a highest signal strength as the first transmit beam.

8. The method according to claim 2, wherein the first message is an RRC message.

9. The method according to claim 3, wherein the first message is an attention AT command.

10. The method according to claim 4, wherein the terminal device has highest transmit power on the first transmit beam.

11. A communication method, comprising:
sending, by a network device, a first message to a terminal device, wherein the first message indicates the terminal device to activate beam locking in a non-radio resource control RRC connected state; and
receiving, by the network device, a second message from the terminal device, wherein the second message indicates that the beam locking of the terminal device is activated.

12. The method according to claim 11, wherein the first message is an RRC message.

13. The method according to claim 11, wherein the first message is an attention AT command.

14. The method according to any one of claims 11 to 13, further comprising:
receiving, by the network device, a random access request from the terminal device, and skipping sending a random access response to the terminal device; and
measuring, by the network device, transmit power of the terminal device on a physical random access channel.

15. The method according to claim 14, further comprising:
sending, by the network device, a third message to the terminal device, wherein the third message indicates the terminal device to deactivate the beam locking; and
receiving, by the network device, a fourth message from the terminal device, wherein the fourth message indicates that the beam locking is deactivated.

16. A first communication apparatus, comprising:
a processor; and
a memory storing instructions, wherein when the instructions are executed by the processor, the terminal device is enabled to:
receive a first message from a network device, wherein the first message indicates the terminal device to activate beam locking in a non-radio resource control RRC connected state; and
send a second message to the network device, wherein the second message is used to acknowledge activation of the beam locking.

17. The first communication apparatus according to claim 16, wherein that the terminal device receives the first message from the network device comprises:
the terminal device in an RRC connected state receives the first message from the network device; and
after the terminal device sends the second message to the network device, the method further comprises:
the terminal device maintains the beam locking when the terminal device enters the non-RRC connected state.

18. The first communication apparatus according to claim 16, wherein that the terminal device receives the first message from the network device comprises:
the terminal device in the non-RRC connected state receives the first message from the network device.

19. The first communication apparatus according to any one of claims 16 to 18, wherein the instructions further enable the terminal device to:
send a random access request to the network device by using a first transmit beam; and
in response to determining that no random access response RAR is received from the network device in a preset time window, resend the random access request by using the first transmit beam.

20. The first communication apparatus according to claim 19, wherein the instructions further enable the terminal device to:
deactivate the beam locking when a quantity of times of resending the random access request reaches a preset quantity of times.

21. The first communication apparatus according to claim 19, wherein the instructions further enable the terminal device to:
receive a third message from the network device, wherein the third message indicates the terminal device to deactivate beam locking; and
deactivate the beam locking in response to the third message.

22. The first communication apparatus according to claim 19, wherein the instructions further enable the terminal device to:
receive at least one synchronization signal block SSB from the network device; and
determine, based on a signal strength of each of the at least one SSB, a beam orienting an SSB having a highest signal strength as the transmit beam.

23. The first communication apparatus according to claim 17, wherein the first message is an RRC message.

24. The first communication apparatus according to claim 18, wherein the first message is an attention AT command.

25. The first communication apparatus according to claim 19, wherein the terminal device has highest transmit power on the first transmit beam.

26. A second communication apparatus, comprising:
a processor; and
a memory storing instructions, wherein when the instructions are executed by the processor, the network device is enabled to:
send a first message to a terminal device, wherein the first message indicates the terminal device to activate beam locking in a non-radio resource control RRC connected state; and
receive a second message from the terminal device, wherein the second message indicates that the beam locking of the terminal device is activated.

27. The second communication apparatus according to claim 26, wherein the first message is an RRC message.

28. The second communication apparatus according to claim 26, wherein the first message is an attention AT command.

29. The second communication apparatus according to any one of claims 26 to 28, wherein the instructions further enable the network device to:
receive a random access request from the terminal device, and skip sending a random access response to the terminal device; and
measure transmit power of the terminal device on a physical random access channel.

30. The second communication apparatus according to claim 29, wherein the instructions further enable the network device to:
send a third message to the terminal device, wherein the third message indicates the terminal device to release the beam locking; and
receive a fourth message from the terminal device, wherein the fourth message indicates that the beam locking is deactivated.

31. A communication system, comprising at least one of a first communication apparatus or a second communication apparatus, wherein the first communication apparatus is configured to perform the method according to any one of claims 1 to 10, and the second communication apparatus is configured to perform the method according to any one of claims 11 to 15.

32. A computer-readable storage medium, wherein the computer-readable storage medium stores instructions, and when the instructions are executed by an electronic device, the electronic device is enabled to perform the method according to any one of claims 1 to 10 or any one of claims 11 to 15.

33. A computer program product, wherein the computer program product comprises instructions, and when the instructions are executed by an electronic device, the electronic device is enabled to perform the method according to any one of claims 1 to 10 or any one of claims 11 to 15.
